# EUROPEAN PATENT SPECIFICATION

(11) **EP 3 892 792 B1**
(45) Date of publication and mention of the grant of the patent: **16.04.2025**
(21) Application number: 19893732.8
(22) Date of filing: 20.09.2019
(51) Int. Cl.: E04F 13/14, E04F 13/21, B28B 1/08, B28B 3/00, C04B 28/04, E04F 13/08, C04B 28/02, C04B 111/54

(54) **ARTIFICIAL CEMENT-BASED ULTRA-HIGH-PERFORMANCE STONE SLAB**
KUNSTSTEINPLATTE AUF ZEMENTBASIS MIT ULTRAHOHER LEISTUNGSFÄHIGKEIT
DALLE DE PIERRE ARTIFICIELLE À ULTRA-HAUTE PERFORMANCE À BASE DE CIMENT

(30) Priority: 07.12.2018 CN 201811491642
(43) Date of publication of application: 13.10.2021
(73) Proprietor: Zhong, Bing, Xiantao, Hubei 433000 (CN)
(72) Inventor: Zhong, Bing, Xiantao, Hubei 433000 (CN)
(74) Representative: Chung, Hoi Kan
(86) International application number: PCT/CN2019/106904
(87) International publication number: WO 2020/114041

(56) References cited:
- CN-A- 102 003 055
- CN-A- 104 533 046
- CN-A- 108 193 858
- CN-A- 108 824 737
- CN-A- 109 356 351
- CN-A- 109 577 578
- CN-U- 201 826 475
- CN-U- 204 001 325
- JP-A- 2007 002 609
- US-A- 4 642 960

## Description

### FIELD

The subject matter herein generally relates to architectural decoration, in particular to cement-based ultra-high-performance artificial stone plates.

### BACKGROUND

Existing building walls are decorated with stone-effect panels, mainly including natural stone panels and ceramic imitation slates. Natural stone panels are decorative panels made of naturally formed stone by cutting, grinding, sandblasting and other methods. Ceramic imitation slate is made by firing clay into a natural stone effect plate at high temperature. The installation methods mainly include wet pasting and dry hanging. 1. Wet sticking: Wet sticking is the use of sticky mortar to stick the plate on the wall to be decorated. It is a rigid connection. Due to outdoor wind pressure, rain, and thermal expansion and contraction caused by temperature differences, it will accelerate the viscosity of the mortar Reduced, coupled with the large weight of the plate, it is easy to cause the plate to fall off, and the rigid connection is extremely poor in seismic resistance. The current wet paste method is only used for decoration in the low-rise building, and the use of the high-rise building is basically prohibited. 2. Dry hanging: firstly, you need to install the metal dragon frame to support the plate on the wall to be decorated. Since the naturally formed stone is already in a solid state, the embedded parts for external hanging connection cannot be placed inside. Ceramics cannot be placed inside due to high temperature firing. The two plates can only be slotted or perforated on the side of the plate or perforated on the back of the plate during installation, and then metal connectors can be used to connect and install the load-bearing dragon skeleton. Stones and ceramics are inherently brittle, and the connectors that are stuck in the side grooves or holes during installation need to bear the weight of the plate. If the plate is thin, the thin wall will easily cause the edge to fall off; the back is punched, and the thin plate Perforation is easy to break, and the strength of shallow hole hanging is low and safety is poor. Therefore, the thickness of dry hanging stone cannot be less than 25mm. The time for ceramics to be used for dry hanging is relatively short. There is no standard for its thickness, but the ceramic plate needs a certain thickness. To ensure its safety, the weight of the dry hanging stone is more than 65 kg per square meter, so that the dragon skeleton used for the load-bearing plate also needs to maintain a certain strength to carry its weight. This causes the production and installation of the metal dragon skeleton to be expensive and heavier. Plate installation costs are also high, and due to the heavy weight of the plate, the house structure needs to be enlarged to carry it. This also increases the cost of house construction, stone mining damages the environment, and ceramic high-temperature firing wastes energy and can easily cause pollution.

After searching, it was found that in order to solve the above problems, in the patent (Patent No.: 2014100884568) a method of making and installing artificial plate stone, and the patent (Patent No.: 201410694568X) using a combination of dry hanging and wet paste cement-based artificial plate. In the stone installation method, the inventor used the characteristics of cement-based materials from liquid to solid, and embedded nuts and hooks that can be connected externally. After the plate is solidified, the nuts or hooks are integrated with the plate, which solves the problem of natural stone and ceramic plates. The defects of the plug-in connectors are embedded, and the plates are laid with mesh and fibers, so that the plates are not easy to break even when they are thin, which greatly reduces the weight of the plates and solves the problems caused by the heavy weight of natural stone and ceramic plates. This kind of shortcomings, the plate uses discarded stone chips of various colors and low-cost cement as the main materials, and uses the advantages of concrete molding to overcome the shortcomings of stone mining and high-temperature firing of ceramics that destroy the environment and waste energy. Although the above shortcomings are effectively solved, However, the plate design is produced by low-strength technology, which has the disadvantages of low strength, low density, poor weather resistance, high water absorption, and poor freeze-thaw resistance. Since the embedded nuts are placed independently, the hanging strength is low. The buried hook protrudes on the back of the plate, which easily affects the assembly line processing of the plate, and the protruding hook is not easy to stack during transportation, which may easily cause the plate to break. Documents CN 108 824 737 A and US 4 642 960 A are also relevant documents in the art.

### Technical solution

The object of the present invention is to provide a cement-based ultra-high-performance artificial stone plate to solve the above-mentioned problems in the background art.

To achieve the above objectives, the present invention provides a cement-based ultra-high-performance artificial stone according to claim 1.

Preferably, thickness of the cement-based plate body is 5-25 mm.

Preferably, the mesh is a stainless steel mesh, and the nut is a stainless steel nut.

Preferably, screw opening of the nut is not lower than back of the cement-based plate body of 4mm.

Preferably, the screw opening of the nut is level with back of the cement-based plate body.

Preferably, the bottom of the nut is provided with a wing plate around the nut.

Preferably, nut body of the nut passes through hole of the mesh, and the wing plate of the nut is located at bottom of the hole of the mesh, and size of the wing plate is larger than size of the hole of the mesh.

Preferably, bottom the nuts is welded and fixed on the stainless steel mesh.

Preferably, number of the nut is two or more.

### Beneficial effect

The present invention uses the basic materials and formula technology necessary for ultra-high performance concrete (UHPC) as the basic requirements, and takes strong vibration, strong pressure, and vacuum as the main plate making methods. Strong pressure and vacuum are difficult to achieve in the production of ultra-high-performance concrete in existing bridges and bridges; strong pressure combined with water-absorbing cloth can squeeze out and absorb water from the plate; vacuum can extract the gas and excess water in the plate Both, the two can reduce the moisture by more than 20%, and can make the density of the plate higher, so as to achieve the principle condition that the ultra-high performance concrete water-binder ratio is lower and the strength is higher.

The meshes connected by the whole plate are used as aggregate, which has a better connection and support skeleton than the dispersive steel fibers necessary for ultra-high performance concrete. The protrusions formed by extrusion are multiple A pressed body, such as a carved plate or a molded plate, is formed by strong pressure on the back of the plate, so that the mesh does not float out of the surface of the plate, and the protrusions are extruded as part of the ultra-high-performance concrete, allowing the mesh to solidify Afterwards, it is completely integrated with the plate body, and multiple protrusions form a uniform pressing on each point in the mesh, so that the mesh is stabilized in the ultra-high performance concrete plate and integrated with it. The nut used for the external connection is connected with the mesh together, and has a very high pull strength. The nut flush with the back of the plate is convenient for assembly line processing and transportation. In this way, when the nut is mounted, the stress points are connected to the entire plate, which has a very high mounting strength, which overcomes the defects of the original cement-based artificial stone independently placed nuts and low mounting strength when independently stressed.

Thickness of the plate of the present invention is about 10 mm, so that weight of the plate is greatly reduced. The plate made by the invention has the remarkable characteristics of ultra-high strength, high toughness and high durability possessed by ultra-high performance concrete, which is more than several times better than the performance indicators of ordinary strength concrete, so as to completely overcome the original cement-based plate strength of the inventor Low, low density, poor disassembly resistance, poor weather resistance, poor freeze-thaw resistance and other defects.

The present invention makes full use of the screwing advantages of the nut and screw, and can be connected with any shaped metal connector, which can complete dry hanging humidification stickers, dry hanging with or without skeleton, and any plate cutting combination with metal connecting bars. The shape of the line can be used to clamp the thermal insulation plate of any material to form an integrated thermal insulation plate with an extended screw through a nut and a metal strip, and can be installed quickly and safely.

The invention does not require quarrying in the mountains, no high-temperature firing, no chemical reaction, and the waste materials can be reused or other building materials after dehydration and drying, completely achieving zero pollution and zero emissions. It overcomes the disadvantages of natural stone quarrying and damaging the environment, high-temperature firing of ceramics wastes energy, and the destruction of the environment caused by the mining of pottery clay is a technology that benefits the country and the people. Therefore, there is room for improvement within the art.

### BRIEF DESCRIPTION OF THE DRAWINGS

FIG. 1 is a diagram of an exemplary embodiment of an artificial cement based ultrahigh performance stone of the present disclosure.
FIG.2 is a partial enlarged view of back of the artificial cement based ultrahigh performance stone of FIG.1
FIG. 3 is a cross-sectional view taken along line A-A of FIG. 2.
FIG. 4 is another cross-sectional view of taken along line A-A in FIG. 2.
FIG. 5 is a schematic view of back of the artificial cement based ultrahigh performance stone with irregular protrusions.
FIG. 6 is a schematic diagram of an installation status of the artificial cement based ultrahigh performance stone of FIG.1 of the present disclosure.

### DETAILED DESCRIPTION

### Example 1

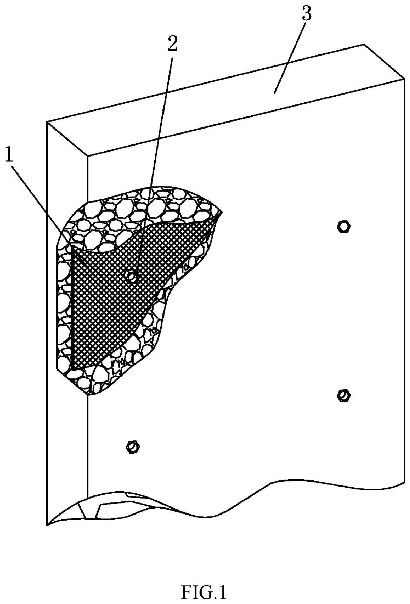

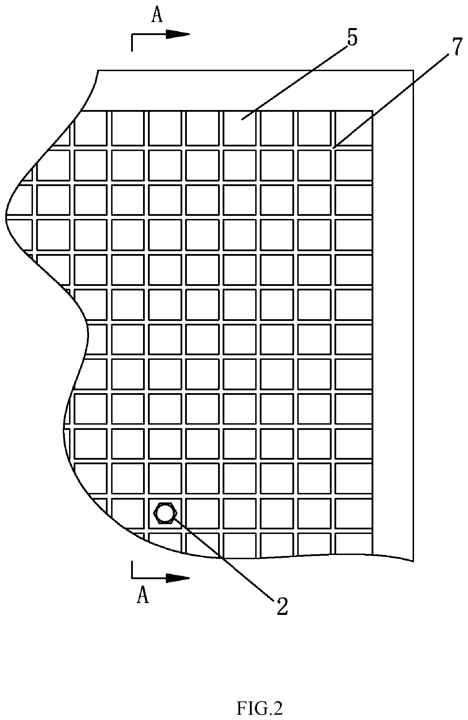

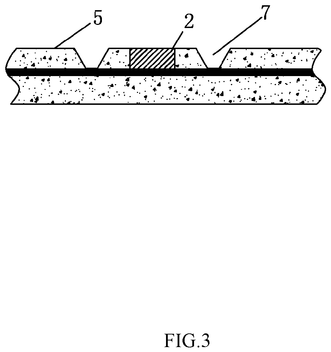

The cement-based ultra-high-performance artificial stone plate include a plate body made of ultra-high-performance concrete (UHPC). The plate body is embedded with a stainless steel mesh 1, the stainless steel mesh 1 is welded and fixed with several stainless steel nuts 2 (such as shown in FIG.1, 2), number of the stainless steel nuts 2 is two or more. Openning the stainless steel nut 2 is leveled with back of the plate body 3. The plate body 3 is made by process of strong vibration, strong pressure, and vacuum. Thickness of the plate body is 8-12 mm. A specific manufacturing process is as follows:
1. Raw material configuration: 525 white Portland cement 100 parts by weight, silica fume 8 parts by weight, slag powder 20 parts by weight, 4-6 mesh yellow rice stone 60 parts by weight, 4-6 mesh black rice stone 20 parts by weight, 10-20 mesh yellow rice stone 50 Parts by weight, 40-80 mesh white rice stone 20 parts by weight, 80-120 mesh quartz powder 5 parts by weight, 800-1200 mesh quartz powder 5 parts by weight, polycarboxylic acid superplasticizer 0.8 parts by weight, hydrophobic powder 0.6 parts by weight, iron oxide yellow pigment 2 parts by weigh, flyash 10 parts by weight, nano titanium dioxide 1 part by weight, nano silica 1.5 parts by weight, nano calcium carbonate 2.5 parts by weight.
2. The above dry powder materials are mixed evenly by dry powder equipment to obtain dry powder, and packed in bags.
3. The dry powder is added to high-performance water reduction agent the high-efficiency water-reducing agent and water in proportion and stirred for 10 minutes, and in the embodiment, all the above components in this step are coagulated by adding an appropriate amount of water, and a ratio of water-binderis about 0.2.
4. Provide high-frequency vibration equipment, strong pressure equipment and vacuum equipment, and provide a mold frame with a size of 600 mm*900mm, and spray mold release agent in the mold frame.
5. Put the stirred slurry into the mold frame, level the slurry and move the mold frame to the high-frequency vibration equipment, and turn on the high-frequency vibration equipment, and vibrate the mold frame for 10 to 15 seconds.
6. Lay a stainless steel mesh 1 with several nuts 2 on surface of the slurry at a determined position, and lay an insulation cloth on surface of the stainless steel mesh. Stainless steel nut 2 and stainless steel mesh have an advantages of anti-corrosion. The stainless steel mesh will not be rusted when it is cut into any size when installed, which overcomes the defects of the ordinary stainless steel mesh and steel fiber that are easy to rust.
7. Turn on the hydraulic equipment and align a pressure plate with a same specification to the mold frame. Press 20 seconds with a pressure about 500 tons, and turn on the vacuum equipment to evacuate to -0.08MPa at the same time. The two operations are synchronized. The pressure plate is provided with regular grooves to form regular protrusions (as shown in FIGs. 1, 2, and 3) on the cement-based plate body, the protrusions 5 allow the stainless steel mesh to completely solidify in the cement-based plate body. The groove between any two protrusions 5 is close to the stainless steel mesh.
8. Take out the isolating cloth, send the plate body 3 with a pallet to a steam curing room for curing.
9. Customize the cured plate to a standard thickness with a thickness-setting equipment.
10. Polish the determined thickness plate with a stone continuous polishing equipment.
11. Dry and spray surface protective agent, and send it to construction site. Color of the artificial stone plate: yellow; high-gloss surface; specifications: 600*900mm; thickness 10mm.

### Example 2

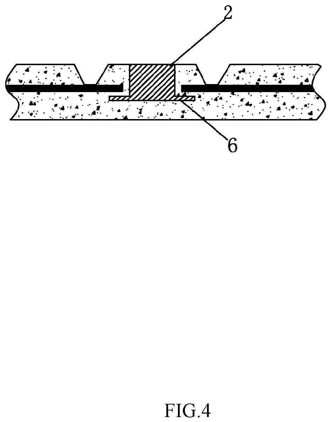

The cement-based ultra-high-performance artificial stone plate, includes an ultra high performance concrete (UHPC) plate body. The plate body is embedded with stainless steel mesh 1.The stainless steel mesh 1 is provided with a nut. Bottom of the nut is provided with a wing plate 6 beyond the side of the nut (as shown in FIGs. 1 , 2 , 4), the wing plate of the nut is located at the bottom of hole of the stainless steel mesh 1, size of the wing plate is larger than size of the hole of the stainless steel mesh, main body of the nut passes through the mesh hole of the bottom mesh, and a screw hole of the nut is not lower than the back of the plate body 4 mm.

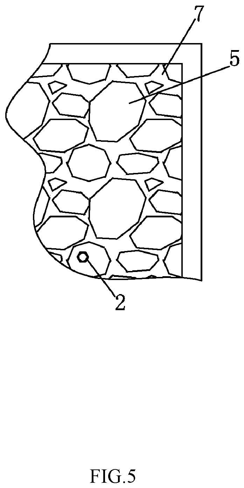

The stainless steel mesh has an advantages of anti-dismantling strength, so that an aggregate of the plate body and the mesh are completely integrated. A rigidity and toughness of the stainless steel wire prevents the plate from breaking and falling off even when it is very thin. The thickness of the plate body is 5-8mm, and the specific manufacturing process is as follows:
1. Provide raw material, and raw material configuration: 525 white portland cement 100 parts by weight, silica fume 8 parts by weight, slag powder 20 parts by weight, 4-6 mesh red rice stone 60 parts by weight, 4-6 mesh black rice stone 20 parts by weight, 10-20 mesh yellow rice stone 50 Parts by weight, 40-80 mesh white rice stone 20 parts by weight, 80-120 mesh quartz powder 5 parts by weight, 800-1200 mesh quartz powder 5 parts by weight, polycarboxylic acid superplasticizer 0.8 parts by weight, hydrophobic powder 0.6 parts by weight, iron oxide yellow pigment 2 parts by weigh, flyash 10 parts by weight.
2. Mix the above dry powders evenly through dry powder equipment to obtain dry powders and pack them in bags.
3. Add high-efficiency water-reducing agent and water into the dry powder in proportion and stir for 10 minutes, and in the embodiment, all the above components in this step are coagulated by adding an appropriate amount of water, and a ratio of water-binderis about 0.25.
4. Provide strong vibration equipment, strong pressure equipment and vacuum equipment, and provide a mold frame with a size of 600mm *600mm, and spray mold release agent in the mold frame.
5. Put the stirred slurry into the mold frame, level the slurry and turn on the high-frequency vibrator, and vibrate for 10 to 15 seconds.
6. Set more than one nut on the the vibrated slurry at a determined position, lay the stainless steel mesh 1 and the isolation cloth, and the stainless steel mesh is stainless steel mesh.
7. Turn on the strong pressure equipment, and align a pressure plate with irregular grooves of the same specifications to the mold frame to form irregular protrusions (as shown in FIG. 5). The protrusions 5 allow the stainless steel mesh to completely solidify in the plate body. The groove 7 between any two of the embedded protrusions 5 is close to the stainless steel mesh sheet, apply a pressure of 500 tons for 20 seconds and simultaneously turned on the vacuum equipment to evacuate the vacuum to -0.08 MPa, the two opration is synchronized.
8. Take out the isolating cloth and send the plate body 3 to the steam curing room for curing with a pallet.
9. Customize the cured plate to a standard thickness with a thickness-setting equipment.
10. Use sandblasting equipment to form sandblasting surface.
11. Dry and spray surface protection agent and send it to construction site. Product color: red; sandblasted surface; specifications: 600*600mm; thickness: 8mm.

### Embodiment 3:

Cement-based artificial stone plate, thickness of the stone plate is 15-25mm.

A structure and manufacturing process are the same as those in Embodiment 2.

Product color: red; sandblasted surface; specifications: 1600*3200mm; thickness is 25mm.

### Embodiment 4:

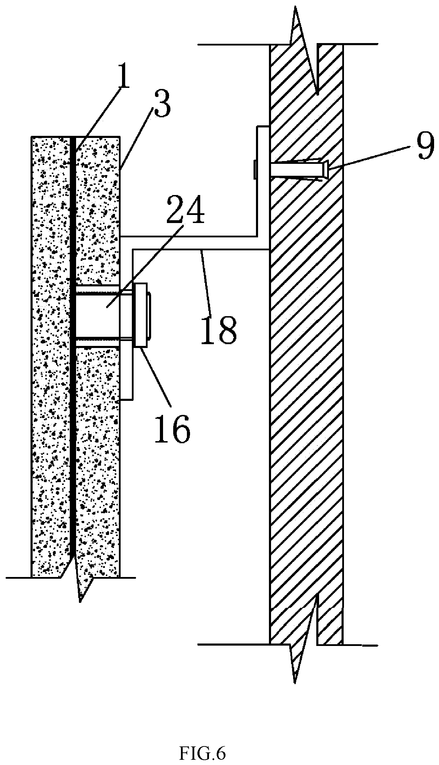

A thickness of the plate body is 12-15mm, the specific manufacturing process is as follows:
1. Raw material configuration: 525 white portland cement 100 parts by weight, silica fume 8 parts by weight, slag powder 20 parts by weight, 4-6 mesh yellow rice stone 60 parts by weight, 4-6 mesh black rice stone 20 parts by weight, 10-20 mesh yellow rice stone 50 Parts by weight, 40-80 mesh white rice stone 20 parts by weight, 80-120 mesh quartz powder 5 parts by weight, 800-1200 mesh quartz powder 5 parts by weight, polycarboxylic acid superplasticizer 0.8 parts by weight, hydrophobic powder 0.6 parts by weight, iron oxide red pigment 2 parts by weigh, and flyash 10 parts by weight.
2. Mix the above dry powders through dry powder equipment to make dry powders and pack them in bags.
3. Add high-efficiency water-reducing agent and water into the dry powder in proportion and stir for 10 minutes, and in the embodiment, all the above components in this step are coagulated by adding an appropriate amount of water, and a ratio of water to cementitious material is 0.16.
4. Mix the above dry powders through dry powder equipment to make dry powders and pack them in bags.
5. Add high-efficiency water-reducing agent and water into the dry powder in proportion and stir for 10 minutes.
6. Provide strong vibration equipment, strong pressure equipment and vacuum equipment, and provide a mold frame with a size of 1000mm * 1000mm, and spray mold release agent in the mold frame.
7. Put the stirred slurry into the mold frame, level the slurry and turn on the high-frequency vibrator, and vibrate the mold frame for 10 to 15 seconds.
8. Lay a stainless steel mesh with nut 2 and an isolation cloth on surface the vibrated slurry according to the determined position. When the stainless steel mesh is installed, it will not rust when cut into any size. It overcomes the defects of common metal mesh and steel fiber that are easy to rust. The stainless steel nut has the advantage of anti-rust.
9. Turn on the strong pressure equipment, pressed at 500 tons for 20 seconds and simultaneously turned on the vacuum equipment to evacuate to - 0.08 MPa, time of the two operation is synchronized.
10. Send the plate body 3 using a pallet to a steam curing room for curing.
11. Customize the cured plate to a standard thickness with a thickness-setting equipment.
12. Use sandblasting equipment to form sandblasting surface, the sandblasting surface is a front surface of the cement-based artificial stone plate.
13. Dry and spray surface protection agent and send it to construction site. Product color: red; sandblasted surface; specifications: 1000* 1000mm; thickness: 12mm.
14. As shown in FIG. 6, the first construction method is to bend the steel bar into a "Z" type hanger bar 18, and at least two screw holes are provided at both ends of the hanger bar 18, screw hole of one end of the hanger bar 18 is inserted one screw. An inner end of the screw 24 is screwed to the stainless steel nut 2 on the plate body. A fastening nut 16 is screwed on an outer end of the screw 24, and the fastening nut 16 presses one end of the hanging bar 18 on the back of the plate body. The expansion bolt 9 is inserted into the wall through the screw hole at the other end of the hanging strip 18,.Tighten the expansion bolt 9 to fix the "Z"-shaped steel bar 18 to the wall to complete the installation of the artificial stone plate.

The rice stone in the present invention is an important aggregate. It will be apparent to those skilled in the art that the present invention is not limited to the details of the above exemplary embodiments, and that the present invention can be implemented in other specific forms without departing from the spirit or basic characteristics of the present invention.

Therefore, regardless of the point of view, the embodiments should be regarded as exemplary and non-limiting, the scope of the present invention is defined by the appended claims rather than the above description, so it is intended to be All changes within the meaning and scope of the equivalent requirements of the claims are included in the present invention. Any reference signs in the claims should not be considered as limiting the claims involved.

The embodiments shown and described above are only examples. Therefore, many commonly-known features and details are neither shown nor described. Even though numerous characteristics and advantages of the present technology have been set forth in the foregoing description, together with details of the structure and function of the present disclosure, the disclosure is illustrative only, and changes may be made in the detail, including in matters of shape, size, and arrangement of the parts within the principles of the present disclosure, up to and including the full extent established by the broad general meaning of the terms used in the claims. It will, therefore, be appreciated that the embodiments described above may be modified within the scope of the appended claims.

## Claims

1. An artificial cement based ultrahigh performance stone, comprising: a cement-based plate body (3), wherein the plate body (3) is made from a main ingredient of cement, silica fume, aggregate, and water reducing agent, and prepared with a characteristic of ultra-high-performance concrete by main means about strong vibration, strong pressure and vacuum; a mesh (1) embedded in the plate body (3) ; a nut (2) arranged on the mesh (1), wherein a screw mouth of the nut (2) is exposed on a back of the plate body (3), wherein the back of the plate body (3) is provided with regular or irregular protrusions, and wherein a groove between any two protrusions is close to the mesh (1).

2. The artificial cement based ultrahigh performance stone of claim 1, wherein the thickness of the cement-based plate body (3) is in a range of 5-25 mm.

3. The cement-based ultra-high-performance artificial stone plate of claim 1, wherein the mesh (1) is a stainless steel mesh, and the nut (2) is a stainless steel nut.

4. The artificial cement based ultrahigh performance stone of claim 1, wherein the screw mouth of the nut (2) is not lower than the back of the cement-based plate body (3) of 4mm.

5. The artificial cement based ultrahigh performance stone of claim 4, wherein the screw mouth of the nut (2) is levelled with the back of the cement-based plate body (3).

6. The artificial cement based ultrahigh performance stone of claim 1 or claim 2 or claim 3 or claim 4, wherein the bottom of the nut (2) is provided with a wing plate around the nut (2).

7. The artificial cement based ultrahigh performance stone of claim 6, wherein the nut body of the nut (2) passes through a hole of the mesh (1), and the wing plate of the nut (2) is located at the bottom of the hole of the mesh (1), and the size of the wing plate is larger than the size of the hole of the mesh (1).

8. The artificial cement based ultrahigh performance stone of claim 3, wherein the bottom of the nuts is welded and fixed on the stainless steel mesh.

9. The artificial cement based ultrahigh performance stone of claim 1, wherein the number of the nut (2) is at least two.

## Patentansprüche

1. Künstlicher, zementbasierter Ultrahochleistungsstein, umfassend:
ein zementbasierter Plattenkörper (3), wobei der Plattenkörper (3) aus einem Hauptbestandteil aus Zement, Silikastaub, Aggregat und Wasserreduktionsmittel besteht und mit einer Eigenschaft von Ultrahochleistungsbeton durch Hauptmethoden wie starke Vibration, starken Druck und Vakuum vorbereitet wird; ein in den Plattenkörper (3) eingebettetes Netz (1); eine auf dem Netz (1) angeordnete Mutter (2), wobei ein Schraubgewinde der Mutter (2) auf der Hinterseite des Plattenkörpers (3) freigelegt ist, wobei die Hinterseite des Plattenkörpers (3) mit regelmäßigen oder unregelmäßigen Vorsprüngen versehen ist, und wobei eine Rille zwischen jeweils zwei Vorsprüngen sich in der Nähe des Netzes (1) befindet.

2. Künstlicher, zementbasierter Ultrahochleistungsstein nach Anspruch 1, wobei die Dicke des zementbasierten Plattenkörpers (3) im Bereich von 5 bis 25 mm liegt.

3. Künstlicher, zementbasierter Ultrahochleistungsstein nach Anspruch 1, wobei das Netz (1) ein Edelstahlnetz ist und die Mutter (2) eine Edelstahlmutter ist.

4. Künstlicher, zementbasierter Ultrahochleistungsstein nach Anspruch 1, wobei das Schraubgewinde der Mutter (2) nicht geringer als die Hinterseite des zementbasierten Plattenkörpers (3) von 4 mm ist.

5. Künstlicher, zementbasierter Ultrahochleistungsstein nach Anspruch 4, wobei das Schraubgewinde der Mutter (2) mit der Hinterseite des zementbasierten Plattenkörpers (3) auf gleicher Ebene liegt.

6. Künstlicher, zementbasierter Ultrahochleistungsstein nach Anspruch 1 oder Anspruch 2 oder Anspruch 3 oder Anspruch 4, wobei der Boden der Mutter (2) mit einer Flügelplatte um die Mutter (2) versehen ist.

7. Künstlicher, zementbasierter Ultrahochleistungsstein nach Anspruch 6, wobei der Mutternkörper der Mutter (2) durch ein Loch des Netzes (1) läuft und die Flügelplatte der Mutter (2) sich am Boden des Lochs des Netzes (1) positioniert und die Größe der Flügelplatte größer ist als die Größe des Lochs des Netzes (1).

8. Künstlicher, zementbasierter Ultrahochleistungsstein nach Anspruch 3, wobei der Boden von Muttern verschweißt, und auf dem Edelstahlnetz befestigt wird.

9. Künstlicher, zementbasierter Ultrahochleistungsstein nach Anspruch 1, wobei die Anzahl von Muttern (2) mindestens zwei beträgt.

## Revendications

1. Pierre artificielle à ultra-haute performance à base de ciment, comprenant :
un corps de plaque (3) à base de ciment, dans laquelle le corps de plaque (3) est fabriqué à partir d'un ingrédient principal de ciment, de fumées de silice, d'agrégat et de plastifiant-réducteur d'eau, et préparé avec une caractéristique de béton à ultra-haute performance par des moyens principaux de forte vibration, de forte pression et de vide ; une maille (1) intégrée dans le corps de plaque (3) ; un écrou (2) disposé sur la maille (1), dans laquelle une bouche de vis de l'écrou (2) est exposé sur une face arrière du corps de plaque (3), dans laquelle la face arrière du corps de plaque (3) est pourvu de saillies régulières ou irrégulières, et dans laquelle une rainure entre deux saillies quelconques est proche de la maille (1).

2. Pierre artificielle à ultra-haute performance à base de ciment selon la revendication 1, dans laquelle l'épaisseur du corps de plaque (3) à base de ciment est compris dans une plage allant de 5 à 25 mm.

3. Plaque de pierre artificielle à ultra-haute performance à base de ciment de la revendication 1, dans laquelle la maille (1) est une maille en acier inoxydable et l'écrou (2) est un écrou en acier inoxydable.

4. Pierre artificielle à ultra-haute performance à base de ciment selon la revendication 1, dans laquelle la bouche de vis de l'écrou (2) n'est pas plus bas que la face arrière du corps de plaque (3) à base de ciment de 4 mm.

5. Pierre artificielle à ultra-haute performance à base de ciment selon la revendication 4, dans laquelle la bouche de vis de l'écrou (2) est au même niveau que la face arrière du corps de plaque (3) à base de ciment.

6. Pierre artificielle à ultra-haute performance à base de ciment selon la revendication 1 ou la revendication 2 ou la revendication 3 ou la revendication 4, dans laquelle la partie inférieure de l'écrou (2) est pourvue d'une plaque d'aile autour de l'écrou (2).

7. Pierre artificielle à ultra-haute performance à base de ciment selon la revendication 6, dans laquelle le corps d'écrou de l'écrou (2) passe à travers un trou de la maille (1), et la plaque d'aile de l'écrou (2) est située au fond du trou de la maille (1), et la taille de la plaque d'aile est plus grande que la taille du trou de la maille (1).

8. Pierre artificielle à ultra-haute performance à base de ciment selon la revendication 3, dans laquelle la partie inférieure des écrous est soudée et fixée sur la maille en acier inoxydable.

9. Pierre artificielle à ultra-haute performance à base de ciment selon la revendication 1, dans laquelle le nombre d'écrous (2) est d'au moins deux.
